# EUROPEAN PATENT SPECIFICATION

(11) **EP 3 231 149 B1**
(45) Date of publication and mention of the grant of the patent: **08.11.2023**
(21) Application number: 14816178.9
(22) Date of filing: 10.12.2014
(51) Int. Cl.: H04L 65/612, H04L 65/75, H04L 65/752

(54) **BUFFER DISCARD CONTROL FOR CONTENT STREAMING VIA INTERMEDIATE NODE**
PUFFERSTREICHUNGSSTEUERUNG ZUM INHALTS-STREAMING ÜBER ZWISCHENKNOTEN
COMMANDE DE REJET DE MÉMOIRE TAMPON POUR DIFFUSION DE CONTENU EN CONTINU PAR LE BIAIS D'UN NOEUD INTERMÉDIAIRE

(43) Date of publication of application: 18.10.2017
(73) Proprietor: Telefonaktiebolaget LM Ericsson (publ), 164 83 Stockholm (SE)
(72) Inventor: RÁCZ, Sándor, 2700 Cegléd (HU); SZABÓ, Géza, 6000 Kecskemét (HU)
(74) Representative: Zacco Sweden AB
(86) International application number: PCT/EP2014/077244
(87) International publication number: WO 2016/091302

(56) References cited:
- US-A1- 2011 252 155
- US-A1- 2014 226 561
- NAM HYUNWOO ET AL: "Towards dynamic QoS-aware over-the-top video streaming", PROCEEDING OF IEEE INTERNATIONAL SYMPOSIUM ON A WORLD OF WIRELESS, MOBILE AND MULTIMEDIA NETWORKS 2014, IEEE, 19 June 2014 (2014-06-19), pages 1-9, XP032656375, DOI: 10.1109/WOWMOM.2014.6918921 [retrieved on 2014-10-08]

## Description

### Technical Field

The present invention relates to methods for streaming content in a communication network and to corresponding devices.

### Background

In communication networks, it is known to utilize streaming to deliver content, e.g., video or audio, from a source to a client. In the case of streaming, the content may already be played at the client while the delivery still continues. Accordingly, excessive delays associated with downloading the content via the communication network may be avoided. Streaming may for example utilize HTTP (Hypertext Transfer Protocol) as specified in IETF RFC 2616 or HTTPS (Hypertext Transfer Protocol Secure) as specified in IETF RFC 2818 for data delivery.

To ensure best possible quality of streamed media, adaptive streaming methods such as have been developed. One example of such adaptive streaming method is DASH (Dynamic Adaptive Streaming over HTTP) as specified in ISO/IEC 23009-1 (second edition, 2014-05-15). In the case of DASH, the source provides the content at various quality levels, and the client may decide which quality level is most appropriate in view of available bandwidth and request the content accordingly. The content is delivered in chunks, which in the case of DASH are referred to as segments, and the client may decide to change the quality level between different chunks of the content, e.g., in response to variations of the available bandwidth. The duration of the chunks for typical video streaming scenarios may be a few seconds, e.g., 5 s.

Further, buffering of the streamed content at the client may be utilized for avoiding adverse effects of variations of the runtime of the chunks through the communication network. In typical video streaming scenarios, the size of the utilized buffer may correspond to about one minute of video playtime. Switching between different quality levels at the beginning of video streaming, when buffer utilization is still small, may occur more frequently than later during the streaming process when variations of bandwidth have less impact due to the larger amount of available buffered content.

However, in many communication networks, such as cellular networks, e.g., as specified by 3GPP (3rd Generation Partnership Project), the delivered content will not only be buffered at the client, but buffering may also occur in intermediate nodes. Examples of such nodes are nodes of a radio access network (RAN) which may buffer data packets conveying the content before transmission via a radio link to the client. Due to variable radio conditions, such radio link may become a bottleneck for the streaming process, and degradation of radio link quality may trigger switching to a lower quality level of streaming by the client.

When the client switches to a lower quality level of streaming, it requests chunks of the content which correspond to the lower quality level. At that time, there may be still data packets corresponding to the chunks of the higher quality level which are buffered in the intermediate node, and the intermediate node will continue transmitting these data packets towards the client. Since the client already switched to the lower quality level, this causes unnecessary network load because now both the chunks of the higher quality level and the chunks of the lower quality level may consume network resources for their transmission. Accordingly, there is a need for techniques which allow for efficiently streaming content in a communication network.

US2014/0226561A1 describes streaming of content via a base station to a user equipment if the user equipment terminates a TCP (Transport Control Protocol) session used for transmitting the content, the base station may discard data packets associated with the terminated session which are not yet transmitted. US 2011/252155 A1 and NAM HYUNWOO ET AL: "Towards dynamic QoS-aware over-the-top video streaming", PROCEEDING OF IEEE INTERNATIONAL SYMPOSIUM ON A WORLD OF WIRELESS, MOBILE AND MULTIMEDIA NETWORKS 2014, IEEE, 19 June 2014 describe further systems of the prior art.

### Summary

The invention is defined by the independent claims. Further, embodiments of the invention are defined by the claims. Moreover, examples, embodiments and descriptions, which are not covered by the claims are presented not as embodiments of the invention, but as background art or examples useful for understanding the invention. The present invention provides a method according to claim 1, a node according to claim 9 and a computer program according to claim 11, the dependent claims define further embodiments.

### Brief Description of the Drawings

Fig. 1 schematically illustrates an exemplary cellular network environment in which content is streamed according to an embodiment of the invention.
Fig. 2 schematically illustrates functionalities of an intermediate node according to an embodiment of the invention.
Fig. 3 shows a flowchart for illustrating a method which may be implemented by a streaming client when streaming content according to an embodiment of the invention.
Figs. 4 shows a flowchart for illustrating a method which may be implemented by an intermediate node when streaming content according to an embodiment of the invention.
Fig. 5 schematically illustrates structures of a node according to an embodiment of the invention.

### Detailed Description of Embodiments

In the following, concepts in accordance with exemplary embodiments of the invention will be explained in more detail and with reference to the accompanying drawings. The illustrated embodiments relate to concepts for streaming content in a communication network. The content may be streamed on the basis of a streaming mechanism supporting dynamic adaptation of quality level such as DASH as specified in ISO/IEC 23009-1 (second edition, 2014-05-15), or SPDY or QUIC (Quick UDP Internet Connections) as developed by Google Inc. The embodiments specifically refer to a scenario using the LTE radio access technology as specified by 3GPP. However, it should be understood that the concepts could also be applied in connection with other radio access technologies, e.g., the Universal Mobile Telecommunications System (UMTS) radio access technology or CDMA2000 radio access technology.

According to the illustrated concepts, an intermediate node, such as a RAN node of a cellular network, receives chunks of streamed content from a streaming server, buffers the received chunks, and forwards at least some of the buffered chunks to a streaming client. The content may for example include video content or other multimedia content. The chunks correspond to a given quality level, which may be selected from a plurality of quality levels in which the content is available at the streaming server. It is assumed that selection of the utilized quality level is done by the streaming client, e.g., by requesting the chunks in the desired quality level from the streaming server. The streaming client may be implemented in a user equipment (UE), such as in a mobile phone, tablet computer, or other communication device having radio connectivity to the communication network. The intermediate node may receive, buffer, and forward the chunks in the form of data packets or other kinds of data units as supported by the communication network. In the illustrated examples, it is assumed that the data packets correspond to IP (Internet Protocol) data packets. For implementing the streaming process, the data packets may be utilized in connection with one or more other protocols, e.g., transport protocols, such as TCP (Transmission Control Protocol) or UDP (User Datagram Protocol), or higher layer protocols, such as HTTP or HTTPS. Each chunk of the streamed content may be conveyed in a corresponding data packet. Further, a chunk of the streamed content may also be conveyed in multiple data packets, or multiple chunks of the streamed content may be conveyed in the same data packet.

The intermediate node may generally be responsible for scheduling delivery of data to the UE of the streaming client, including the delivery of the data packets conveying the chunks of the streamed content, but also other data. In particular, the intermediate node may be responsible for scheduling radio transmissions to the UE of the streaming client, which may for example involve allocation of radio resources for transmission of data packets via a radio link.

In certain scenarios, the intermediate node may detect that the chunks of the given quality level, as currently received and buffered by the intermediate node, are no longer required by the streaming client. This is assumed to occur in a scenario where the streaming client decides to switch to another quality level of streaming and requests the chunks in a different quality level from the streaming server. In the illustrated concepts, the intermediate node may react to detecting such situation by discarding the chunks of the given quality level which have not yet been forwarded to the streaming client. This discarding will typically apply to the chunks of the given quality level which are still buffered by the intermediate node and to the chunks of the given quality level which are still received by the intermediate node (e.g., due to a delay in the reaction of the streaming server to the switching of the quality level). The intermediate node may detect that the chunks of the given quality level are no longer required by the streaming client by inspecting data traffic from the streaming client to the streaming server. For example, such data traffic may include a reset indication, e.g., in the form of a flag or dedicated message in one or more data packets transmitted from the streaming client to the streaming server. By discarding the chunks of the given quality level, unnecessary network load may be avoided. In particular, it can be avoided that the data packets conveying chunks of the quality level which is no longer utilized by the streaming client are nonetheless transmitted towards the streaming client. This may be particularly beneficial when switching from the given quality level to a lower quality level due to a bottleneck formed between the intermediate node and the streaming client. In such situation, discarding the data packets conveying chunks of the quality level which is no longer utilized by the streaming client may help to immediately achieve a higher throughput for the data packets carrying the chunks of the lower quality level.

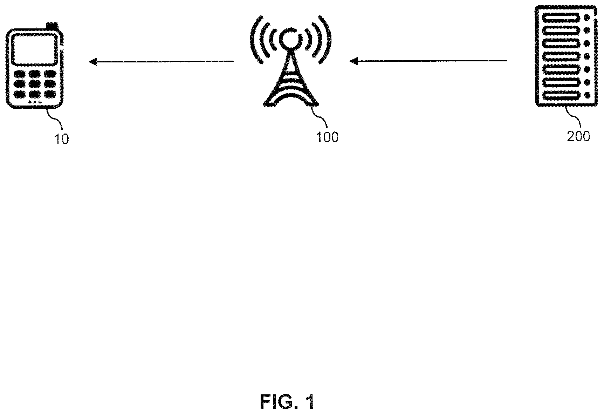

Fig. 1 schematically illustrates an exemplary cellular network environment in which streaming of content may be implemented according to the illustrated concepts. In particular, Fig. 1 illustrates a UE 10 connected to a cellular network, a base station 100 of the cellular network, and a server 200 which is accessible to the UE 10 via the cellular network, in particular via the base station 100. In accordance with the assumed scenario of utilizing the LTE radio access technology, the base station 100 may also be referred to as eNB (evolved Node B). When applying the illustrated concepts of streaming content in the cellular network environment of Fig. 1, the UE 10 may implement the streaming client, the server 200 may implement the streaming server, and the base station 100 may correspond to the intermediate node.

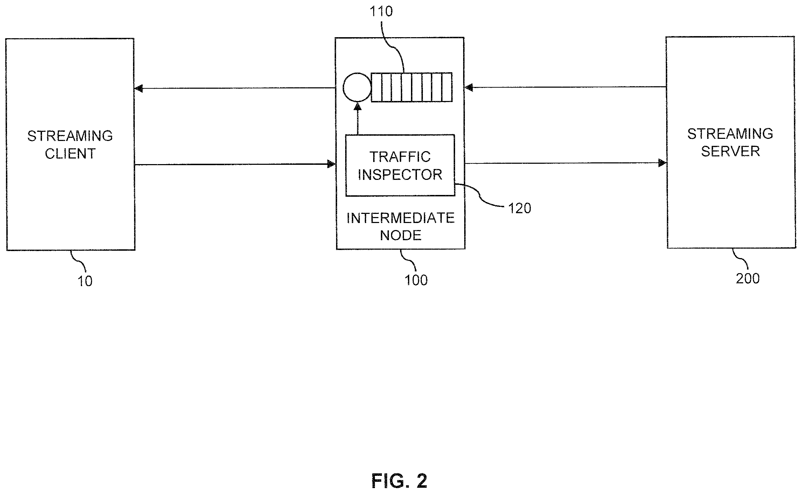

Fig. 2 shows a block diagram for further illustrating functionalities of the streaming client 10, the intermediate node 100, and the streaming server 200 in the streaming process. As can be seen, the streaming process may involve transmitting a downlink flow of data packets from the streaming server 200 via the intermediate node 100 to the streaming client 10. Further, the streaming process may involve transmitting an uplink flow of data packets from the streaming client 10 via the intermediate node 100 to the streaming server 200.

The downlink flow may include the chunks of the streamed content. As illustrated, the data packets of the downlink flow are buffered in a queue 110 provided by the intermediate node 100. The downlink flow may for example be identified by a source network address (e.g., IP address of the streaming server 200) and a target network address (e.g., IP address of the streaming client 10) indicated in a protocol header of the data packets transmitted from the streaming server 200 to the streaming client 10. Further, the downlink flow may be identified by a source port number (e.g., TCP or UDP port number of the streaming server 200) and a target port number (e.g., TCP or UDP port number of the streaming client 10) indicated in a protocol header of the data packets transmitted from the streaming server 200 to the streaming client 10. In addition, the downlink flow may be identified by a protocol identifier indicated in a protocol header of the data packets transmitted from the streaming server 200 to the streaming client 10. The protocol identifier may for example specify that the data packets are based on utilizing TCP or UDP as a transport protocol. The combination of source network address, target network address, source port number, target port number, and protocol identifier may also be referred to as IP-5 tuple. In addition or as an alternative, a flow identifier may be utilized to identify the uplink flow. The data packets of the uplink flow may be marked with such flow identifier upon receipt by the intermediate node 100 and before being stored in the queue 110.

The uplink flow may for example include requests of the streaming client 10 for the chunks of the streamed content. Further, the uplink flow may include other messages from the streaming client 10 to the streaming server 200. For example such messages may indicate that the streaming client 10 decided to switch to another of quality level of streaming. Further, such messages may have the purpose of acknowledging successful receipt of data packets by the streaming client, e.g., in the form of ACK messages as specified by TCP. As illustrated, the data packets of the uplink flow are monitored by a traffic inspector 120 provided by the intermediate node 100. For example, the traffic inspector 120 may perform shallow packet inspection (SPI) by analyzing protocol headers of the data packets transmitted from the streaming client 10. In this way, data packets of the uplink flow may be distinguished from other data packets transmitted through the intermediate node 100 and be related to the downlink flow. The uplink flow may for example be identified by a source network address (e.g., IP address of the streaming client 10) and a target network address (e.g., IP address of the streaming server 200) indicated in a protocol header of the data packets transmitted from the streaming client 10 to the streaming server 200. Further, the uplink flow may be identified by a source port number (e.g., TCP or UDP port number of the streaming client 10) and a target port number (e.g., TCP or UDP port number of the streaming server 200) indicated in a protocol header of the data packets transmitted from the streaming client 10 to the streaming server 200. In addition, the uplink flow may be identified by a protocol identifier indicated in a protocol header of the data packets transmitted from the streaming client 10 to the streaming server 200. Here, it is to be understood that the parameters identifying the uplink flow will be complementary to the parameters identifying the downlink flow. For example, if the downlink flow is identified by a first network address as the source address and a second network address as the target address, the uplink flow is identified by the second network address as the source address and the first network address as the target address. Similarly, if the downlink flow is identified by a first port number as the source port number and a second port number as the target port number, the uplink flow is identified by the second port number as the source port number and the first port number as the target port number. Further, the downlink flow and the uplink flow may be identified by the same protocol identifier. In addition or as an alternative, a flow identifier may be utilized to identify the uplink flow. For example, if the steaming client 10 receives data packets of the downlink flow which are marked with a certain flow identifier, it may mark the data packets of the uplink flow with the same flow identifier.

In the illustrated concepts, the monitoring of the data packets transmitted by the streaming client 10 may be utilized to detect whether the chunks of the streamed content as currently received and buffered by the intermediate node 100 are still required by the streaming client 10. For example, if the streaming client 10 decides to switch to a lower quality level of the streamed content, e.g., due to a congestion on the radio link between the intermediate node 100 and the streaming client 10, it may send a reset indication to the streaming server 200 and start requesting the chunks of the streamed content in the lower quality level. The reset indication may for example be transmitted in the form of a flag or a message in the uplink flow. For example, when utilizing a TCP based streaming mechanism, such as DASH or SPDY, a reset flag as defined in the TCP protocol header may be utilized for this purpose. When utilizing a UDP based streaming mechanism, the streaming client 10 may generate the indication in the form of a QUIC public frame. For transmitting the chunks of the lower quality level, a new downlink flow and a new uplink flow may be established by the streaming client 10 and the streaming server 200, e.g., identified by other source/target port numbers.

The traffic inspector 120 in the intermediate node 100 detects the reset indication and reacts by discarding the data packets conveying the chunks of the higher quality level utilized so far. This may specifically involve discarding the data packets conveying the chunks of the higher quality level as currently buffered in the queue 110. Further, this may involve discarding the data packets conveying the chunks of the higher quality level as received by the intermediate node 100 after detecting the reset indication. In this way, unnecessary resource utilization for transmission of the data packets conveying the chunks of the higher quality level, which are no longer required by the streaming client 10, may be avoided. This at the same time helps to avoid that the data packets conveying the chunks of the lower quality level are affected by the congestion triggering the switching to the lower quality level.

The streaming client 10 may determine an appropriate timing for transmitting the reset indication. For example, the streaming client 10 may start requesting the chunks of the lower quality level already before transmitting the reset indication to avoid interrupting playing of the content by the streaming client 10. For this purpose, the streaming client 10 may take into account a delay for establishing a new flow of data packets with the chunks of the lower quality and/or a remaining playtime of the chunks of the higher quality as still buffered by the streaming client 10.

The discarding of the data packets by the intermediate node 100 may involve identifying data packets conveying the chunks of the higher quality level as currently buffered by the intermediate node 100. For example, in some scenarios the queue 110 may store the data packets conveying the chunks of the higher quality level to be discarded, but also other data packets which should not be discarded. In such scenarios for example the above-mentioned marking of the data packets with the flow identifier may be utilized for identifying the queued data packets to be discarded. In other scenarios, the intermediate node 100 may provide separate queues for each flow, which means that the queue 110 will include the data packets to be discarded, but no other data packets, so that the discarding may be performed by simply deleting all packets from the queue 110.

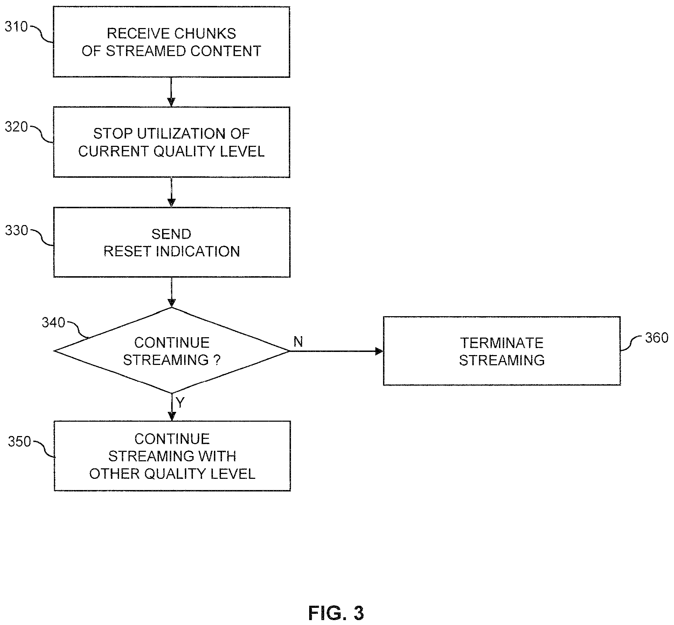

Fig. 3 shows a flowchart for illustrating a method which may be utilized by a streaming client when performing streaming of content on the basis of the illustrated concepts. For example, the method may be implemented by a streaming client in device connected to a communication network, such as the above-mentioned UE 10. If a processor based implementation of the device is used, the steps of the method may be performed by one or more processors of the node. For this purpose, the processor(s) may execute correspondingly configured program code. Further, at least some of the corresponding functionalities may be hardwired in the processor(s).

At step 310, the streaming client, e.g., the streaming client 10, receives chunks of streamed content from a streaming server, e.g., the streaming server 200. The streamed content may include video or other multimedia data. The chunks are received at a given quality level, which may be selected from a plurality of quality levels in which the content is available at the streaming server. The chunks may be conveyed in data packets, e.g., IP data packets, and these data packets may be transported via an intermediate node from the streaming server to the streaming client. For example, as explained in connection with the intermediate node 100, such intermediate node may correspond to a RAN node of a cellular network. The streaming process may be based on the streaming client sending requests for the chunks to the streaming server and receiving the chunks in response to such requests. The requests may for example be based on HTTP or HTTPS.

At step 320, the streaming client may decide to stop the utilization of the current quality level. For example, the streaming client may detect that the available bandwidth is not sufficient for continued utilization of the current quality level, e.g., because there is a congestion at the intermediate node.

At step 330, in response to deciding to stop the utilization of the current quality level at step 320, the streaming client further sends a reset indication towards the streaming server. The reset indication may for example be defined in terms of a flag in a protocol header of one or more data packets transmitted from the streaming client to the streaming server. For example, a reset flag as defined by TCP may be utilized for this purpose. Further, the reset indication may be defined in terms of a frame in a payload section of one or more data packets transmitted from the streaming client to the streaming server., e.g., a QUIC public frame. The data packets conveying the chunks as received at step 310 may be included in a downlink flow of data packets, e.g., identified by a source network address, a target network address, a source port number, a target port number, a protocol identifier, and/or a flow identifier. The reset indication may then be included in an uplink flow associated with this downlink flow, i.e., an uplink flow identified by a source network address, a target network address, a source port number, and/or a target port number which are complementary to the source network address, target network address, source port number, and/or target port number identifying the downlink flow and/or identified by the same protocol identifier and/or flow identifier as the downlink flow.

At step 340, the streaming client may decide whether to continue the streaming of the content. For example, the streaming client may decide to continue the streaming of the content at a lower quality level. This option may for example be selected if the streaming server provides the content also at a lower quality level. In response to deciding to continue the streaming of the content, the streaming client may proceed to step 350, as indicated by branch "Y". In other scenarios, the streaming client may decide to not continue the streaming of the content, e.g., if the available bandwidth is also not sufficient for streaming the content at a lower quality level or if the streaming server does not provide the content in a lower quality level. In response to deciding not to continue the streaming of the content, the streaming client may proceed to step 360, as indicated by branch "N".

At step 350, the streaming client continues the streaming of the content at another quality level, e.g., at a lower quality level. This may for example involve that the streaming client requests and receives the chunks of the streamed content in a lower quality level.

At step 360, the streaming client may terminate the streaming of the content. This may for example involve that the streaming client does request any further chunks of the streamed content.

Irrespective of continuing the streaming at step 350 or terminating the streaming at step 360, the reset indication of step 330 allows for informing nodes of the communication network that the streaming client does not require any further chunks of the current quality level. Such node may then react by discarding data packets conveying these chunks, which allows for avoiding unnecessary resource usage and alleviating congestions.

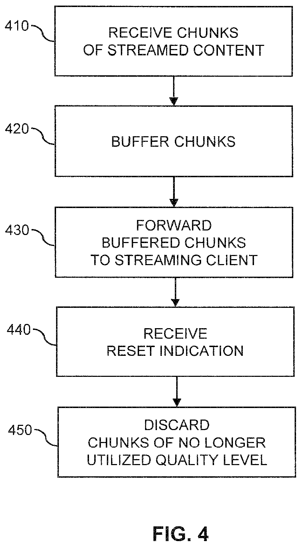

Fig. 4 shows a flowchart for illustrating a method which may be utilized by a node of a communication network when performing streaming of content on the basis of the illustrated concepts. For example, the method may be implemented by an intermediate node conveying data packets between a streaming server and a streaming client, such as the above-mentioned intermediate node 100. The node may for example correspond to a RAN node of a cellular network to which the streaming client is connected via a radio link. If a processor based implementation of the node is used, the steps of the method may be performed by one or more processors of the node. For this purpose, the processor(s) may execute correspondingly configured program code. Further, at least some of the corresponding functionalities may be hardwired in the processor(s).

At step 410, the node, e.g., the intermediate node 100, receives chunks of streamed content from a streaming server, e.g., the streaming server 200. The streamed content may include video or other multimedia data. The chunks are received at a given quality level, which may be selected from a plurality of quality levels in which the content is available at the streaming server. The chunks may be conveyed in data packets, e.g., IP data packets, and these data packets may have the purpose of transporting the chunks from the streaming server to a streaming client, e.g., the streaming client 10. The streaming process may be based on the streaming client sending requests for the chunks to the streaming server and receiving the chunks in response to such requests. The requests may for example be based on HTTP or HTTPS.

At step 420, the node buffers the chunks received at step 410. This may for example involve storing the data packets conveying the chunks in a queue, such as the queue 110. When buffering the data packets, they may also be marked with a flow identifier. For example, upon receipt of the data packets, they may be inspected and marked with a flow identifier. Such marking may for example be based on a source network address, target network address, source port number, target port number, and/or protocol identifier indicated in a protocol header of the data packets.

At step 430, the node forwards the buffered chunks to the streaming client. This may for example also scheduling transmission of the data packets from one or more queues. The forwarding of the buffered chunks to the streaming client may occur via a radio link. For example, the intermediate node may be a RAN node of a cellular network to which the streaming client is connected by a radio link, and the intermediate node and may forward the chunks via this radio link.

At step 440, the node detects that that no further chunks of the given quality level are required by the streaming client. For example, the node may detect this situation on the basis of a reset indication transmitted by the streaming client. The node may identify the reset indication by inspecting data traffic transmitted from the streaming client to the streaming server. The reset indication may for example be defined in terms of a flag in a protocol header of one or more data packets transmitted from the streaming client to the streaming server. For example, a reset flag as defined by TCP may be utilized for this purpose. Further, the reset indication may be defined in terms of a frame in a payload section of one or more data packets transmitted from the streaming client to the streaming server., e.g., a QUIC public frame. The data packets conveying the chunks as received at step 410 may be included in a downlink flow of data packets, e.g., identified by a source network address, a target network address, a source port number, a target port number, a protocol identifier, and/or a flow identifier. The reset indication may then be included in an uplink flow associated with this downlink flow, i.e., an uplink flow identified by a source network address, a target network address, a source port number, and/or a target port number which are complementary to the source network address, target network address, source port number, and/or target port number identifying the downlink flow and/or identified by the same protocol identifier and/or flow identifier as the downlink flow.

At step 450, in response to the detecting that no further chunks of the currently utilized quality level are required by the streaming client at step 440, the node discarding those of the chunks of the given quality level which are not yet forwarded to the streaming client. This discarding of the chunks of the given quality level which are not yet forwarded to the streaming client may involve discarding those of the chunks of the given quality level which are received by the node at the time after detecting that no further chunks of the given quality level are required by the streaming client, e.g., after detecting the reset indication of step 440. The discarding of the chunks of the given quality level which are not yet forwarded to the streaming client may also involve discarding those of the chunks of the given quality level which are buffered by the node at the time of detecting that no further chunks of the given quality level are required by the streaming client, e.g., when detecting the reset indication of step 440.

Discarding of the buffered chunks may be performed on the basis of a packet flow associated with the transmission of the chunks of the given quality level. In other words, if the data packets conveying the chunks of the given quality level are included in a certain downlink flow, at least some of the data packets of this downlink flow may be discarded. The node may identify data packets conveying the chunks to be discarded on the basis of a packet flow marking of the data packets performed upon receipt of the chunks, e.g., on the basis of a flow identifier as mentioned in connection with step 420. Alternatively or in addition, the node may identify the data packets conveying the chunks to be discarded on the basis of a queue to which the data packets are assigned upon receipt by the node. For example, upon receipt of the data packets conveying the chunks of the given quality level, the node may inspect the data packets, identify that these data packets are part of a certain downlink flow, and assign these data packets to a queue corresponding to this flow. Data packets of other downlink flow may be assigned to one or more other queues. The discarding may then be performed by deleting all packets from the queue to which the data packets conveying the chunks of the given quality level were assigned.

After discarding those of the chunks of the given quality level which are not yet forwarded to the streaming client, the node may receive the streamed content in chunks of a different quality level from the streaming server, i.e., in a quality level which is different from the above-mentioned given quality level. For example, this different quality level may be lower than the given quality level. Similar to steps 420 and 430, the node may buffering these chunks and forwarding them to the streaming client.

The discarding of the chunks which are no longer required by the streaming client allows for avoiding unnecessary resource usage and alleviating congestions.

It is to be understood that the methods of Figs. 3 and 4 may be combined in a system which includes at least the streaming client operating according to the method of Fig. 3 and the intermediate node operating according to the method of Fig. 4. Such system may also include the streaming server which sends the chunks of the streamed content via the intermediate node to the streaming client.

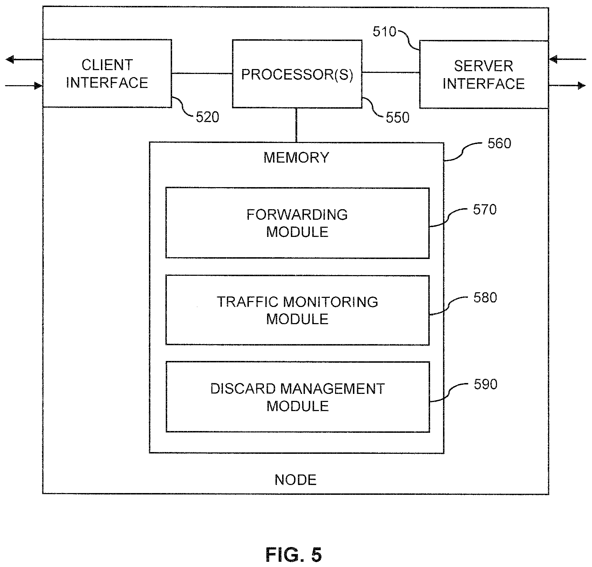

Fig. 5 illustrates exemplary structures which may be used for implementing the above concepts in a node communication network, e.g., in the intermediate node 100.

As illustrated, the node may include a server interface 510 for communication a streaming server, e.g., the streaming server 200, and a client interface 520 for communication with a streaming client, e.g., the streaming client 10. The connection to the streaming client may be via a radio link. Accordingly, in some scenarios the client interface 520 may correspond to a radio interface.

Further, the node includes one or more processors 550 coupled to the interfaces 510, 520, and a memory 560 coupled to the processor(s) 550. The memory 560 may include a Read Only Memory (ROM), e.g., a flash ROM, a Random Access Memory (RAM), e.g., a Dynamic RAM (DRAM) or Static RAM (SRAM), a mass storage, e.g., a hard disk or solid state disk, or the like. The memory 560 includes suitably configured program code to be executed by the processor(s) 550 so as to implement the above-described functionalities of the intermediate node. In particular, the memory 560 may include various program code modules for causing the node to perform processes as described above, e.g., corresponding to the method steps of Fig. 4.

As illustrated, the memory 560 may include a forwarding module 570 for implementing the above-described functionalities of receiving and forwarding chunks of streamed content. Further, the memory 560 may include a traffic monitoring module 580 for implementing the above-described functionalities of detecting that no further chunks of a given quality level are required by the streaming client, e.g., in the form of a reset indication. Further, the memory 560 may include a discard management module 590 for implementing the above-mentioned functionalities of discarding chunks of streamed content.

It is to be understood that the structures as illustrated in Fig. 5 are merely schematic and that the node may actually include further components which, for the sake of clarity, have not been illustrated, e.g., further interfaces or processors. Also, it is to be understood that the memory 560 may include further types of program code modules, which have not been illustrated, e.g., program code modules for implementing known functionalities of RAN node of a cellular network. According to some embodiments, also a computer program may be provided for implementing functionalities of the node, e.g., in the form of a physical medium storing the program code and/or other data to be stored in the memory 560 or by making the program code available for download or by streaming:
As can be seen, the concepts as described above may be used for efficiently streaming content in a communication network. In particular, due to the discarding of chunks which are requested by the streaming client, but not required anymore, due to switching to another quality level, unnecessary utilization of network resources may be avoided and congestions may be alleviated or resolved.

It is to be understood that the examples and embodiments as explained above are merely illustrative and susceptible to various modifications. For example, the illustrated concepts may be applied in connection with various radio technologies, without limitation to the above-mentioned example of LTE or UMTS radio technology. Further, the illustrated concepts could also be applied in connection with wire based network technologies, such as DSL (Digital Subscriber Line), powerline, or Ethernet based network technologies. Still further, while the discarding in response to detecting that no further chunks of a given quality level are required by the streaming client in response to switching to a lower quality level of streaming is considered to be particularly beneficial, this discarding may also provide advantages in other scenarios, e.g., when terminating the streaming of content or even when switching to a higher quality level. Moreover, it is to be understood that the above concepts may be implemented by using correspondingly designed software to be executed by one or more processors of an existing device, or by using dedicated device hardware.

## Claims

1. A method of streaming content in a communication network, the method comprising:
a node (100) of the communication network receiving streamed content in chunks of a given quality level from a streaming server (200);
the node (100) buffering the received chunks; and
the node (100) forwarding at least some of the buffered chunks to a streaming client (10);
in response to detecting that no further chunks of the given quality level are required by the streaming client (10) due to the streaming client (10) switching to another quality level of streaming, the node (100) discarding those of the chunks of the given quality level which are not yet forwarded to the streaming client (10);
wherein said discarding of the chunks of the given quality level which are not yet forwarded to the streaming client (10) comprises discarding those of the chunks of the given quality level which are buffered by the node (100) at the time of detecting that no further chunks of the given quality level are required by the streaming client (10);
wherein the node (100) performing said discarding of the buffered chunks on the basis of a packet flow associated with the transmission of the chunks of the given quality level;
**characterized in that**
the node (100) identifying the data packets of the chunks to be discarded on the basis of a queue (110) to which the data packets are assigned upon receipt by the node (100), wherein the queue 110 comprises:
data packets consist of both the chunks to be discarded and not to be discarded, wherein the chunks are discarded based on the identification by a flow identifier; or
data packets consist of the chunks to be discarded, wherein the chunks are discarded by deleting the queue.

2. The method according to claim 2, comprising:
the node (100) detecting that no further chunks of the given quality level are required by the streaming client (10) by inspecting data traffic transmitted from the streaming client (10) to the streaming server (200) to identify a reset indication from the streaming client (10).

3. The method according to claim 2,
wherein the reset indication is defined in terms of a flag in a header of one or more data packets transmitted from the streaming client (10) to the streaming server (200).

4. The method according to claim 2 or 3,
wherein the reset indication is defined in terms of a frame in a payload section of one or more data packets transmitted from the streaming client (10) to the streaming server (100).

5. The method according to any one of the preceding claims
wherein said discarding of the chunks of the given quality level which are not yet forwarded to the streaming client (10) comprises discarding those of the chunks of the given quality level which are received by the node (100) at the time after detecting that no further chunks of the given quality level are required by the streaming client (10).

6. The method according to claim 1, comprising:
the node (100) identifying data packets of the chunks to be discarded on the basis of a packet flow marking of the data packets performed upon receipt of the chunks.

7. The method according to any one of the preceding claims, comprising:
after discarding those of the chunks of the given quality level which are not yet forwarded to the streaming client (10), the node (100) receiving the streamed content in chunks of a further quality level from the streaming server (200), the further quality level being different from said given quality level, the node (100) buffering the received chunks of the further quality level, and the node (100) forwarding the buffered chunks of the further quality level to the streaming client (10).

8. The method according to any one of the preceding claims,
wherein communication network is a cellular network, the node (100) is part of a radio access network of the cellular network, and said forwarding of the chunks to the streaming client (10) is performed via a radio link.

9. A node (100) for a communication network, the node comprising:
at least one interface (510) with respect to a streaming server (100);
at least one interface (520) with respect to a streaming client (10); and
at least one processor (550), the at least one processor (550) being configured to:
- receive streamed content in chunks of a given quality level from the streaming server (200);
- buffer the received chunks; and
- forward at least some of the buffered chunks to the streaming client (10);
- in response to detecting that no further chunks of the given quality level are required by the streaming client (10) due to the streaming client (10) switching to another quality level of streaming, discard those of the chunks of the given quality level which are not yet forwarded to the streaming client (10);
wherein said discarding of the chunks of the given quality level which are not yet forwarded to the streaming client (10) comprises discarding those of the chunks of the given quality level which are buffered by the node (100) at the time of detecting that no further chunks of the given quality level are required by the streaming client (10); wherein the at least one processor (550) is configured to perform said discarding of the buffered chunks on the basis of a packet flow associated with the transmission of the chunks of the given quality level;
**characterized in that**
the at least one processor (550) is configured to identify the data packets of the chunks to be discarded on the basis of a queue (110) to which the data packets are assigned upon receipt by the node (100), wherein the queue 110 comprises:
data packets consist of both the chunks to be discarded and not to be discarded, wherein the chunks are discarded based on the identification by a flow identifier; or
data packets consist of the chunks to be discarded, wherein the chunks are discarded by deleting the queue.

10. The node (100) according to claim 9, wherein the at least one processor (550) is configured to detect that no further chunks of the given quality level are required by the streaming client (10) by inspecting data traffic transmitted from the streaming client (10) to the streaming server (200) to identify a reset indication from the streaming client (10).

11. A computer program comprising program code to be executed by at least one processor (550) of a node (100) of a communication network, wherein execution of the program code causes the at least one processor (550) to perform steps of a method according to any one of claims 1 to 8.

## Patentansprüche

1. Verfahren zum Streamen von Inhalt in einem Kommunikationsnetz, wobei das Verfahren umfasst:
dass ein Knoten (100) des Kommunikationsnetzwerkes gestreamten Inhalt in Blöcken mit einem gegebenen Qualitätsniveau von einem Streaming-Server (200) empfängt;
dass der Knoten (100) die empfangenen Blöcke puffert; und
dass der Knoten (100) mindestens einige der gepufferten Blöcke an einen Streaming-Client (10) weiterleitet;
dass als Reaktion darauf, dass detektiert wird, dass keine weiteren Blöcke mit dem gegebenen Qualitätsniveau durch den Streaming-Client (10) aufgrund dessen gefordert werden, dass der Streaming-Client (10) zu einem anderen Streaming-Qualitätsniveau wechselt, der Knoten (100) diejenigen der Blöcke mit dem gegebenen Qualitätsniveau streicht, die noch nicht an den Streaming-Client (10) weitergeleitet wurden;
wobei das Streichen der Blöcke mit dem gegebenen Qualitätsniveau, die noch nicht an den Streaming-Client (10) weitergeleitet wurden, Streichen derjenigen der Blöcke mit dem gegebenen Qualitätsniveau, die durch den Knoten (100) zu dem Zeitpunkt gepuffert sind, zu dem detektiert wird, dass keine weiteren Blöcke mit dem gegebenen Qualitätsniveau durch den Streaming-Client (10) gefordert werden, umfasst;
wobei der Knoten (100) das Streichen der gepufferten Blöcke basierend auf einem Paketfluss durchführt, welcher der Übertragung der Blöcke mit dem gegebenen Qualitätsniveau zugeordnet ist;
**dadurch gekennzeichnet, dass**
der Knoten (100) die Datenpakete der zu streichenden Blöcke basierend auf einer Warteschlange (110) identifiziert, der die Datenpakete nach dem Empfang durch den Knoten (100) zugewiesen werden, wobei die Warteschlange (110) Folgendes umfasst:
Datenpakete, die sowohl aus den zu streichenden als auch den nicht zu streichenden Blöcken bestehen, wobei die Blöcke basierend auf der Identifizierung durch eine Flusskennung gestrichen werden; oder
Datenpakete, die aus den zu streichenden Blöcken bestehen, wobei die Blöcke gestrichen werden, indem die Warteschlange gelöscht wird.

2. Verfahren nach Anspruch 1, umfassend:
dass der Knoten (100) detektiert, dass keine weiteren Blöcke mit dem gegebenen Qualitätsniveau durch den Streaming-Client (10) gefordert werden, indem Datenverkehr, der von dem Streaming-Client (10) an den Streaming-Server (200) übertragen wird, geprüft wird, um eine Rücksetzangabe von dem Streaming-Client (10) zu identifizieren.

3. Verfahren nach Anspruch 2,
wobei die Rücksetzangabe hinsichtlich eines Flags in einem Header eines oder mehrerer Datenpakete, die von dem Streaming-Client (10) an den Streaming-Server (200) übertragen werden, definiert ist.

4. Verfahren nach Anspruch 2 oder 3,
wobei die Rücksetzangabe hinsichtlich eines Rahmens in einem Nutzlatzabschnitt eines oder mehrerer Datenpakete, die von dem Streaming-Client (10) an den Streaming-Server (200) übertragen werden, definiert ist.

5. Verfahren nach einem der vorhergehenden Ansprüche,
wobei das Streichen der Blöcke mit dem gegebenen Qualitätsniveau, die noch nicht an den Streaming-Client (10) weitergeleitet wurden, Streichen derjenigen der Blöcke mit dem gegebenen Qualitätsniveau, die durch den Knoten (100) nach dem Zeitpunkt empfangen werden, zu dem keine weiteren Blöcke mit dem gegebenen Qualitätsniveau durch den Streaming-Client (10) gefordert werden, umfasst.

6. Verfahren nach Anspruch 1, umfassend:
dass der Knoten (100) Datenpakete der zu streichenden Blöcke basierend auf einer Paketflussmarkierung der Datenpakete, die nach dem Empfang der Blöcke durchgeführt wird, identifiziert.

7. Verfahren nach einem der vorhergehenden Ansprüche, umfassend:
dass nach dem Streichen derjenigen der Blöcke mit dem gegebenen Qualitätsniveau, die noch nicht an den Streaming-Client (10) weitergeleitet wurden, der Knoten (100) den gestreamten Inhalt in Blöcken mit einem weiteren Qualitätsniveau von dem Streaming-Server (200) empfängt, wobei sich das weitere Qualitätsniveau von dem gegebenen Qualitätsniveau unterscheidet, der Knoten (100) die empfangenen Blöcke mit dem weiteren Qualitätsniveau puffert und der Knoten (100) die gepufferten Blöcke mit dem weiteren Qualitätsniveau an den Streaming-Client (10) weiterleitet.

8. Verfahren nach einem der vorhergehenden Ansprüche,
wobei das Kommunikationsnetz ein Mobilfunknetz ist, der Knoten (100) Teil eines Funkzugangsnetzes des Mobilfunknetzes ist und das Weiterleiten der Blöcke an den Streaming-Client (10) über eine Funkverbindung durchgeführt wird.

9. Knoten (100) für ein Kommunikationsnetz, wobei der Knoten Folgendes umfasst:
mindestens eine Schnittstelle (510) in Bezug auf einen Streaming-Server (200);
mindestens eine Schnittstelle (520) in Bezug auf einen Streaming-Client (10); und
mindestens einen Prozessor (550), wobei der mindestens eine Prozessor (550) zu Folgendem konfiguriert ist:
- Empfangen von gestreamtem Inhalt in Blöcken mit einem gegebenen Qualitätsniveau von dem Streaming-Server (200);
- Puffern der empfangenen Blöcke; und
- Weiterleiten mindestens einiger der gepufferten Blöcke an den Streaming-Client (10);
- als Reaktion darauf, dass detektiert wird, dass keine weiteren Blöcke mit dem gegebenen Qualitätsniveau durch den Streaming-Client (10) aufgrund dessen gefordert werden, dass der Streaming-Client (10) zu einem anderen Streaming-Qualitätsniveau wechselt, Streichen derjenigen der Blöcke mit dem gegebenen Qualitätsniveau, die noch nicht an den Streaming-Client (10) weitergeleitet wurden;
wobei das Streichen der Blöcke mit dem gegebenen Qualitätsniveau, die noch nicht an den Streaming-Client (10) weitergeleitet wurden, Streichen derjenigen der Blöcke mit dem gegebenen Qualitätsniveau, die durch den Knoten (100) zu dem Zeitpunkt gepuffert sind, zu dem detektiert wird, dass keine weiteren Blöcke mit dem gegebenen Qualitätsniveau durch den Streaming-Client (10) gefordert werden, umfasst; wobei der mindestens eine Prozessor (550) dazu konfiguriert ist, das Streichen der gepufferten Blöcke basierend auf einem Paketfluss durchzuführen, welcher der Übertragung der Blöcke mit dem gegebenen Qualitätsniveau zugeordnet ist;
**dadurch gekennzeichnet, dass**
der mindestens eine Prozessor (550) dazu konfiguriert ist, die Datenpakete der zu streichenden Blöcke basierend auf einer Warteschlange (110) zu identifizieren, der die Datenpakete nach dem Empfang durch den Knoten (100) zugewiesen werden, wobei die Warteschlange (110) Folgendes umfasst:
Datenpakete, die sowohl aus den zu streichenden als auch den nicht zu streichenden Blöcken bestehen, wobei die Blöcke basierend auf der Identifizierung durch eine Flusskennung gestrichen werden; oder
Datenpakete, die aus den zu streichenden Blöcken bestehen, wobei die Blöcke gestrichen werden, indem die Warteschlange gelöscht wird.

10. Knoten (100) nach Anspruch 9, wobei der mindestens eine Prozessor (550) dazu konfiguriert ist, zu detektieren, dass keine weiteren Blöcke mit dem gegebenen Qualitätsniveau durch den Streaming-Client (10) gefordert werden, indem Datenverkehr, der von dem Streaming-Client (10) an den Streaming-Server (200) übertragen wird, geprüft wird, um eine Rücksetzangabe von dem Streaming-Client (10) zu identifizieren.

11. Computerprogramm, umfassend Programmcode, der durch mindestens einen Prozessor (550) eines Knotens (100) eines Kommunikationsnetzes auszuführen ist, wobei die Ausführung des Programmcodes den mindestens einen Prozessor (550) dazu veranlasst, Schritte eines Verfahrens nach einem der Ansprüche 1 bis 8 durchzuführen.

## Revendications

1. Procédé de diffusion de contenu en continu dans un réseau de communication, le procédé comprenant :
un noeud (100) du réseau de communication reçoit un contenu diffusé en continu en segments d'un niveau de qualité donné provenant d'un serveur de diffusion en continu (200) ;
le noeud (100) met en mémoire tampon les segments reçus ; et
le noeud (100) transfère au moins certains des segments mis en mémoire tampon à un client de diffusion en continu (10) ;
en réponse à la détection qu'aucun autre segment du niveau de qualité donné n'est requis par le client de diffusion en continu (10) en raison du passage du client de diffusion en continu (10) à un autre niveau de qualité de diffusion en continu, le noeud (100) rejette les segments du niveau de qualité donné qui ne sont pas encore transférés au client de diffusion en continu (10) ;
dans lequel ledit rejet des segments du niveau de qualité donné qui ne sont pas encore transférés au client de diffusion en continu (10) comprend le rejet des segments du niveau de qualité donné qui sont mis en mémoire tampon par le noeud (100) au moment de la détection qu'aucun autre segment du niveau de qualité donné n'est requis par le client de diffusion en continu (10) ;
dans lequel le noeud (100) effectue ledit rejet des segments mis en mémoire tampon sur la base d'un flux de paquets associé à la transmission des segments du niveau de qualité donné ;
**caractérisé en ce que** le noeud (100) identifie les paquets de données des segments à rejeter sur la base d'une file d'attente (110) à laquelle les paquets de données sont affectés lors de leur réception par le noeud (100), dans lequel la file d'attente (110) comprend :
des paquets de données constitués à la fois de segments à rejeter et de segments à ne pas rejeter, les segments étant rejetés sur la base de l'identification par un identifiant de flux ; ou
des paquets de données constitués des segments à rejeter, les segments étant rejetés par suppression de la file d'attente.

2. Procédé selon la revendication 1, comprenant :
le noeud (100) détecte qu'aucun autre segment du niveau de qualité donné n'est requis par le client de diffusion en continu (10) en inspectant un trafic de données transmis du client de diffusion en continu (10) au serveur de diffusion en continu (200) pour identifier une indication de réinitialisation provenant du client de diffusion en continu (10) .

3. Procédé selon la revendication 2,
dans lequel l'indication de réinitialisation est définie en termes d'un indicateur dans un en-tête d'un ou plusieurs paquets de données transmis du client de diffusion en continu (10) au serveur de diffusion en continu (200).

4. Procédé selon la revendication 2 ou 3,
dans lequel l'indication de réinitialisation est définie en termes d'une trame dans une section de charge utile d'un ou plusieurs paquets de données transmis du client de diffusion en continu (10) au serveur de diffusion en continu (200).

5. Procédé selon l'une quelconque des revendications précédentes
dans lequel ledit rejet des segments du niveau de qualité donné qui ne sont pas encore transférés au client de diffusion en continu (10) comprend le rejet des segments du niveau de qualité donné qui sont reçus par le noeud (100) après la détection qu'aucun autre segment du niveau de qualité donné n'est requis par le client de diffusion en continu (10).

6. Procédé selon la revendication 1, comprenant :
le noeud (100) identifie des paquets de données des segments à rejeter sur la base d'un marquage de flux de paquets des paquets de données effectué lors de la réception des segments.

7. Procédé selon l'une quelconque des revendications précédentes, comprenant :
après le rejet des segments du niveau de qualité donné qui ne sont pas encore transférés au client de diffusion en continu (10), le noeud (100) reçoit le contenu diffusé en continu en segments d'un autre niveau de qualité provenant du serveur de diffusion en continu (200), l'autre niveau de qualité étant différent dudit niveau de qualité donné, le noeud (100) met en mémoire tampon les segments reçus de l'autre niveau de qualité, et le noeud (100) transfère les segments mis en mémoire tampon de l'autre niveau de qualité au client de diffusion en continu (10).

8. Procédé selon l'une quelconque des revendications précédentes,
dans lequel le réseau de communication est un réseau cellulaire, le noeud (100) fait partie d'un réseau d'accès radio du réseau cellulaire, et ledit transfert des segments vers le client de diffusion en continu (10) est effectué par le biais d'une liaison radio.

9. Noeud (100) pour un réseau de communication, le noeud comprenant :
au moins une interface (510) par rapport à un serveur de diffusion en continu (200) ;
au moins une interface (520) par rapport à un client de diffusion en continu (10) ; et
au moins un processeur (550), l'au moins un processeur (550) étant configuré pour :
- recevoir un contenu diffusé en continu en segments d'un niveau de qualité donné provenant du serveur de diffusion en continu (200) ;
- mettre en mémoire tampon les segments reçus ; et
- transférer au moins certains des segments mis en mémoire tampon au client de diffusion en continu (10) ;
- en réponse à la détection du fait qu'aucun autre segment du niveau de qualité donné n'est requis par le client de diffusion en continu (10) en raison du passage du client de diffusion en continu (10) à un autre niveau de qualité de diffusion en continu, rejeter les segments du niveau de qualité donné qui ne sont pas encore transférés au client de diffusion en continu (10) ;
dans lequel ledit rejet des segments du niveau de qualité donné qui ne sont pas encore transférés au client de diffusion en continu (10) comprend le rejet des segments du niveau de qualité donné qui sont mis en mémoire tampon par le noeud (100) au moment de la détection qu'aucun autre segment du niveau de qualité donné n'est requis par le client de diffusion en continu (10) ; dans lequel l'au moins un processeur (550) est configuré pour effectuer ledit rejet des segments mis en mémoire tampon sur la base d'un flux de paquets associé à la transmission des segments du niveau de qualité donné ;
**caractérisé en ce que** l'au moins un processeur (550) est configuré pour identifier les paquets de données des segments à rejeter sur la base d'une file d'attente (110) à laquelle les paquets de données sont affectés lors de leur réception par le noeud (100), dans lequel la file d'attente (110) comprend :
des paquets de données constitués à la fois de segments à rejeter et de segments à ne pas rejeter, les segments étant rejetés sur la base de l'identification par un identifiant de flux ; ou
des paquets de données constitués des segments à rejeter, les segments étant rejetés par suppression de la file d'attente.

10. Noeud (100) selon la revendication 9, dans lequel l'au moins un processeur (550) est configuré pour détecter qu'aucun autre segment du niveau de qualité donné n'est requis par le client de diffusion en continu (10) en inspectant un trafic de données transmis du client de diffusion en continu (10) au serveur de diffusion en continu (200) pour identifier une indication de réinitialisation provenant du client de diffusion en continu (10).

11. Programme informatique comprenant un code de programme devant être exécuté par au moins un processeur (550) d'un noeud (100) d'un réseau de communication, dans lequel l'exécution du code de programme amène l'au moins un processeur (550) à réaliser des étapes d'un procédé selon l'une quelconque des revendications 1 à 8.
